# EUROPÄISCHE PATENTANMELDUNG

(11) **EP 1 087 363 A2**
(43) Veröffentlichungstag der Anmeldung: **28.03.2001**
(21) Anmeldenummer: 00120510.3
(22) Anmeldetag: 20.09.2000
(51) Int. Cl.: G09F 21/04, B60R 13/00

(54) **Signalvorrichtung, insbesondere zur Verwendung an einem Kraftfahrzeug**

(30) Priorität: 24.09.1999 DE 19945766; 01.12.1999 DE 19957756
(71) Anmelder: Romberg, Anton, 53940 Hellental (DE)
(72) Erfinder: Romberg, Anton, 53940 Hellental (DE)
(74) Vertreter: Castell, Klaus, Dr.-Ing.

(57) **Zusammenfassung**

Es wird eine Signalvorrichtung (1), insbesondere zur Verwendung an einem Kraftfahrzeug (2) beschrieben.

Diese ist erfindungsgemäß durch ein Basismodul (3) sowie ein zweites Modul (4), wobei das zweite Modul (4) an dem Basismodul (3) derart anbringbar ist, dass dieses zumindest teilweise verdeckt ist, gekennzeichnet.

Hierbei können das Basismodul (3) beispielsweise in Form eines Stabes und das zweite Modul (4) in Form einer Hülse ausgebildet sein.

Vorzugsweise weist das Basismodul (3) Mittel zum Befestigen an unterschiedlichen Flächen, vorzugsweise an metallischen Flächen - z. B. einen Haftmagneten (5) - auf.

## Beschreibung

Die Erfindung betrifft eine Signalvorrichtung, insbesondere zur Verwendung an einem Kraftfahrzeug.

Bei defekten, liegengebliebenen Kraftfahrzeugen, die am Straßenrand abgestellt sind, stellt sich für den Vorbeifahrenden oftmals die Frage, ob dieses Kraftfahrzeug bzw. dessen Fahrer Hilfe benötigt oder nicht. Im Regelfall ist der Fahrer eines Kraftfahrzeuges - sofern er Hilfe benötigt - bisher gezwungen, sich durch entsprechende Gesten bei den vorbeifahrenden Kraftfahrzeugen bzw. dessen Fahrern bemerkbar zu machen. Insbesondere bei Dunkelheit kann dies jedoch Probleme bereiten und u. U. sogar für den Fahrer des defekten, liegengebliebenen Kraftfahrzeuges gefährlich sein.

Auch bei am Straßenrand abgestellten Kraftfahrzeugen, bei denen sich kein Fahrer mehr aufhält, stellt sich u. U. für den Vorbeifahrenden die Frage, ob er die zuständigen Behörden, wie beispielsweise Polizei, über dieses Kraftfahrzeug informieren soll.

Aufgabe der vorliegenden Erfindung ist es, eine Signalvorrichtung anzugeben, mittels derer zum einen angezeigt werden kann, ob der Fahrer Hilfe benötigt, und die zum anderen erkennen lässt, ob das abgestellte Kraftfahrzeug bereits bei den zuständigen Behörden gemeldet worden ist.

Zur Lösung dieser Aufgaben wird eine Signalvorrichtung vorgeschlagen, die durch ein Basismodul sowie ein zweites Modul, wobei das zweite Modul an dem Basismodul derart anbringbar ist, dass dieses zumindest teilweise verdeckt ist, gekennzeichnet ist.

Die erfindungsgemäße Signalvorrichtung kann nunmehr bei einem am Straßenrand abgestellten Kraftfahrzeug an bzw. auf diesem befestigt oder aufgestellt werden, so dass für den vorbeifahrenden Autofahrer unschwer zu erkennen ist, ob der Fahrer des abgestellten Kraftfahrzeuges Hilfe benötigt oder nicht. So könnte durch den Gesetzgeber oder durch andere Konventionen beispielsweise vorgeschrieben werden, dass ein Anbringen der erfindungsgemäßen Signalvorrichtung an dem Kraftfahrzeug dann zu erfolgen hat, wenn der Fahrer des abgestellten Kraftfahrzeuges keine Hilfe benötigt. Dies würde bedeuten, dass liegengebliebene Kraftfahrzeuge, bei denen sich noch verletzte oder sonstige hilflose Personen befinden und an denen keine Signalvorrichtung angebracht ist, Hilfe benötigen. Darüber hinaus kann auch jede dritte Person, die dieses Fahrzeug überprüft, feststellen, ob Akuthilfe benötigt wird und durch Anbringen der Signalvorrichtung gewährleisten, dass eine weitere Person diese Überprüfung nicht vornehmen muss.

Nachdem es die erfindungsgemäße Signalvorrichtung ermöglicht, durch das Anbringen des zweiten Modules auf das Basismodul wenigstens zwei unterschiedliche Zustände anzuzeigen, kann durch ein Anbringen des zweiten Modules auf das Basismodul beispielsweise angezeigt werden, dass keine Hilfe mehr benötigt wird, das Kraftfahrzeug bereits von der Polizei kontrolliert und/oder das Kraftfahrzeug bereits den zuständigen Behörden gemeldet worden ist. Insbesondere kann auch die Polizei bzw. die zuständige Behörde ein derartiges zweites Basismodul mitführen, welches dann von der Person, welche im Auftrage der Polizei bzw. der zuständigen Behörde die Überprüfung vornimmt, entsprechend angebracht wird. Es versteht sich, dass die gesamte Signalvorrichtung mit dem Abtransport des Fahrzeuges einer erneuten Verwendung zugeführt werden kann.

Das Basismodul der erfindungsgemäßen Signalvorrichtung ist entsprechend einer vorteilhaften Ausgestaltung in Form eines Stabes ausgebildet, während das zweite Modul in Form einer Hülse ausgebildet ist.

Bei dieser Ausgestaltung der erfindungsgemäßen Signalvorrichtung kann das Anbringen des zweiten Modules somit durch ein Aufschieben des zweiten Modules auf das erste Modul erfolgen.

Selbstverständlich sind weitere Formen - wie beispielsweise die Würfel- oder Tetraederform - denkbar, mittels derer die gewünschten Funktionen der erfindungsgemäßen Signalvorrichtung realisiert werden können. Die Verwendung eines Stabes, aber auch die Verwendung anderer einfacher geometrischer Formen, hat den Vorteil, dass die erfindungsgemäße Signalvorrichtung sehr einfach haut und somit kostengünstig herstellbar ist. Darüber hinaus lässt sich eine derartige Anordnung verhältnismäßig robust herstellen, so dass trotz des günstigen Preises eine erfindungsgemäße Signalvorrichtung ohne weiteres über Jahrzehnte in einem Kraftfahrzeug auf Vorrat mitgeführt werden kann. Es ist somit insbesondere auch möglich, eine derartige Signalvorrichtung zu einem Bestandteil der vorgeschriebenen Grundausrüstung eines Kraftfahrzeuges zu erklären.

Die erfindungsgemäße Signalvorrichtung weiterbildend wird vorgeschlagen, dass das Basismodul Mittel zum Befestigen an unterschiedlichen Flächen, vorzugsweise an metallischen Flächen aufweist. Hierbei sind die Mittel zum Befestigen des Basismodules an einer metallischen Fläche vorzugsweise als wenigstens ein Haftmagnet ausgebildet. Darüber hinaus kann kumulativ oder alternativ eine Unterseite des Basismodules eine rutschfeste Fläche aufweisen, die insbesondere bei nicht-metallischen Oberflächen die Stabilität einer Befestigung an einer Oberfläche erhöht.

Prinzipiell ist es zwar ausreichend, wenn die erfindungsgemäße Signalvorrichtung beispielsweise auf dem Dach oder der Motor- oder Kofferraumhaube des Kraftfahrzeuges aufgesetzt wird, jedoch könnte es in diesem Falle aufgrund des durch die vorbeifahrenden Kraftfahrzeuge verursachten Windes zu einem Herunterfallen der erfindungsgemäßen Signalvorrichtung kommen. Es ist daher zweckmäßiger, wenn die erfindungsgemäße Signalvorrichtung über entsprechende, an die jeweiligen Oberflächen angepasste Mittel zum Befestigen, wie beispielsweise den vorgenannten Haftmagnet, verfügt.

Eine weitere vorteilhafte Ausgestaltung der erfindungsgemäßen Signalvorrichtung ist dadurch gekennzeichnet, dass das Basismodul und/oder das zweite Modul farbig, vorzugsweise farbig reflektierend ausgebildet sind und/oder Reflektorstreifen, -ringe oder -bänder aufweisen.

Diese Ausgestaltung der erfindungsgemäßen Signalvorrichtung ermöglicht es insbesondere dem an einem abgestellten Kraftfahrzeug vorbeifahrenden Verkehrsteilnehmer schneller und einfacher zu erkennen, ob der Fahrer des abgestellten Kraftfahrzeuges noch Hilfe benötigt oder ob das abgestellte Kraftfahrzeug bereits den zuständigen Behörden gemeldet worden ist.

Sofern - wie entsprechend einer weiteren Ausgestaltung der erfindungsgemäßen Signalvorrichtung vorgeschlagen - diese Reflektorstreifen, -ringe oder -bänder abziehbar bzw. mit Mitteln zum Entfernen derselben, wie Laschen oder ähnlichem, ausgebildet sind, bilden diese das zweite Modul zur Anzeige zweier unterschiedlicher Zustände.

Als weitere Lösung schlägt die Erfindung eine Signalvorrichtung vor, welche Einstellmittel umfasst, die eine Einstellung der Signalvorrichtung in zwei verschiedene Zustände erlaubt. Auf diese Weise braucht nicht ein Extramodul bereitgestellt werden, sondern die Signaleinrichtung weist sämtliche notwendigen Einrichtungen auf.

Insbesondere kann die Signaleinrichtung als Signalstab ausgebildet sein, welcher zwei verschiedenartige, insbesondere zwei verschiedenfarbige, Enden aufweist. Ein derartiger Signalstab braucht lediglich umgedreht zu werden, um von einen Zustand in den anderen überführt zu werden.

Um ein derartiges Umdrehen zu erleichtern, kann der Signalstab an jedem seiner Enden eine Befestigungsvorrichtung, wie beispielsweise einen Magneten, aufweisen.

Andererseits können Mittel vorgesehen sein, die ein unbefugtes Ändern des Zustandes unterbinden. Hierzu kann die Einrichtung zur Zustandsänderung eine entsprechende Sicherheitseinrichtung aufweisen. Dieses kann beispielsweise ein Schlüssel, auch ein magnetischer bzw. ein elektronischer Schlüssel, sein. Hierzu kann beispielsweise durch den Schlüssel gewährleistet werden, dass der Stab lediglich in eine Richtung an einem Fahrzeug befestigt werden kann, indem beispielsweise die Befestigungsvorrichtung lediglich an einem Ende des Stabes vorgesehen ist. Durch das Öffnen des Schlosses kann die Befestigungsvorrichtung an dem anderen Ende des Stabes befestigt werden, sodass dieser lediglich in seinem zweiten Zustand an dem Fahrzeug befestigbar ist.

Hierdurch kann insbesondere auch gewährleistet werden, dass ein Fahrzeug nicht als bereits überprüft gekennzeichnet wird, wenn bei diesem Öl oder Kraftstoff ausläuft oder aus anderen Gründen eine amtliche Überprüfung vermieden werden soll, so dass das Fahrzeug, ohne überprüft worden zu sein, von dem Verursacher beseitigt werden kann.

Die erfindungsgemäße Signalvorrichtung ermöglicht es insbesondere an unübersichtlichen Stellen, beispielsweise auch auf Schnellstraßen, an Böschungen, oder in Kurven, dass Fahrer, die zur Hilfe bereit sind, nicht benötigt werden an derartig gefährlichen Stellen zu halten, um ein Fahrzeug zu überprüfen bzw. um Hilfe zu leisten. Auf diese Weise dient die Erfindung der Verkehrssicherheit. Es ist darüber hinaus davon auszugehen, dass bei einer regen Benutzung eines erfindungsgemäßen Signalstabes die Bereitschaft erhöht wird, sich um Fahrzeuge am Straßenrand, im Straßengraben oder ähnliches zu bemühen und gegebenenfalls Hilfe zu leisten. Erkennt ein auf diese Weise um seine Mitmenschen bemühter Fahrer einen erfindungsgemäßen Signalstab, ist er in die Lage versetzt, auf gefährliche Fahrmanöver, insbesondere auf ein Halten an gefährlichen Stellen, zu verzichten und weiß dennoch, dass er seiner Pflicht als Bürger bzw. als Mitmensch und Verkehrsteilnehmer nachgekommen ist.

Der erfindungsgemäße Signalstab bzw. die erfindungsgemäße Signalvorrichtung zeichnen sich dadurch aus, dass ein notwendiges Signal mit einfachsten Mitteln erzeugt wird. Es ist insbesondere nicht notwendig, einen elektrischen Anschluss oder sonstige, komplexe Vorkehrungen vorzusehen, um diese Signalvorrichtung bzw. diesen Signalstab zu nutzen. Es versteht sich allerdings, dass der erfindungsgemäße Signalstab bzw. die erfindungsgemäße Signalvorrichtung auch mit elektrischen bzw. elektronischen Bauteilen ergänzt werden kann. Beispielsweise könnte der Signalstab mittels einer Batterie und einer Leuchte von innen heraus beleuchtet werden. Bei der Verwendung von Reflektorstreifen oder ähnlichem scheinen derartige Maßnahmen jedoch überflüssig.

Um die Signalvorrichtung beispielsweise in einer Notsituation auch zum Zerschlagen einer Autoscheibe zu verwenden, kann an einer Baugruppe der Signalvorrichtung, vorzugsweise an dem Fuß des Basismoduls eine Kante angebracht sein. Sollten die Insassen infolge eines Unfalles oder einer sonstigen Einwirkung nicht mehr in der Lage sein, die Türen zu öffnen bzw. die Fensterscheiben herunterzukurbeln, insbesondere bei Elektrizitätsausfall an Fahrzeugen mit elektrischen Fensterhebern, kann die Signalvorrichtung zum Zerschlagen einer Autoscheibe genutzt werden.

Weiterhin ist es vorteilhaft, wenn an der Signalvorrichtung ein Mittel zum Trennen von Rückhaltegurten angeordnet ist, um bei einem Versagen oder Verklemmen des Gurtschlosses den Rückhaltegurt trotz alledem zu entfernen. Dabei ist es gleichgültig, ob den Insassen des Fahrzeuges selber die Signalvorrichtung unmittelbar zur Verfügung steht, oder ein zu Hilfe eilender Helfer diese Signalvorrichtung aus seinem eigenen Fahrzeug mitführt.

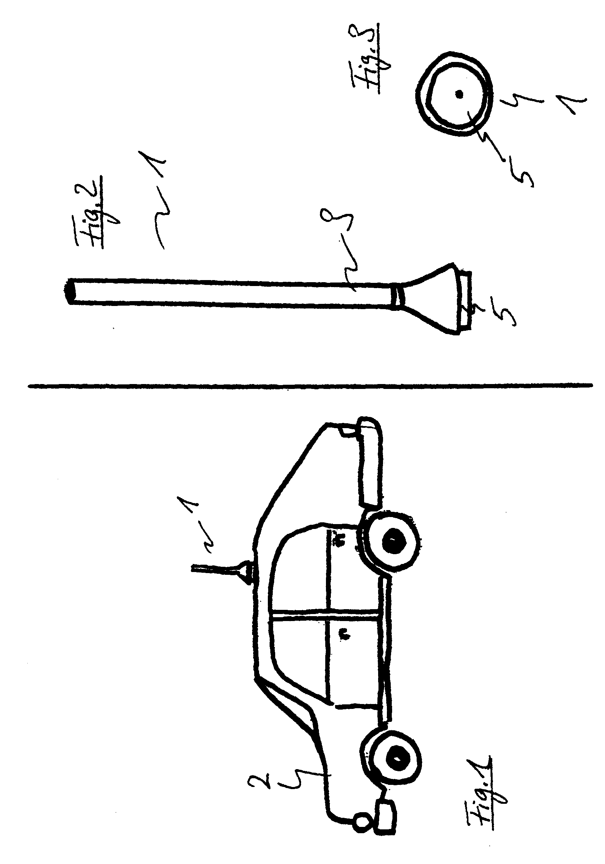

Die erfindungsgemäße Signalvorrichtung sowie weitere Ausgestaltungen derselben seien anhand der in den Figuren 1 bis 6 dargestellten Ausführungsformen der erfindungsgemäßen Signalvorrichtung näher erläutert.

Die Figur 1 zeigt ein Kraftfahrzeug 2 mit der auf dem Kraftfahrzeugdach angeordneten erfindungsgemäßen Signalvorrichtung 1.

Deren Basismodul 3 ist - wie in den Figuren 2 und 4 dargestellt - beispielsweise in Form eines Stabes ausgebildet. Das Basismodul 3 sowie das zweite Modul 4, das in den Figuren 5 und 6 gezeigt ist und das vorzugsweise in Form einer über das Basismodul 3 schiebbaren Hülse ausgebildet ist, können aus unterschiedlichsten Materialien, wie beispielsweise Holz oder Kunststoff bestehen. Insbesondere dann, wenn die Signalvorrichtung nicht fest mit dem Kraftfahrzeug verbunden werden soll, ist darauf zu achten, dass sie ein ausreichendes Gewicht aufweist.

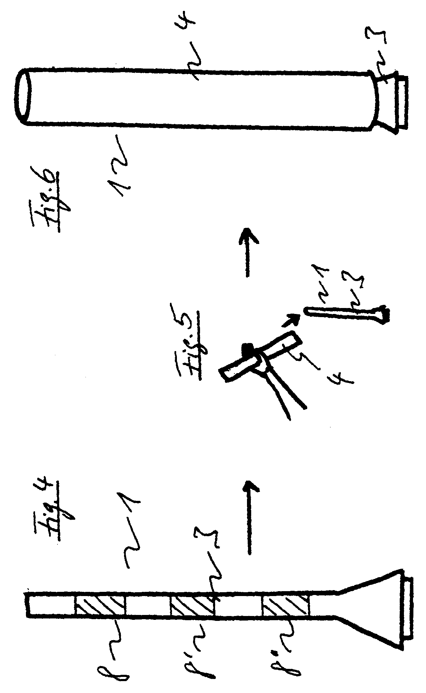

Das in der Figur 2 dargestellte Basismodul 3 weist einen Haftmagnet 5 auf, so dass eine sichere Befestigung an einem Kraftfahrzeug mit einem metallischen Rahmen erfolgen kann.

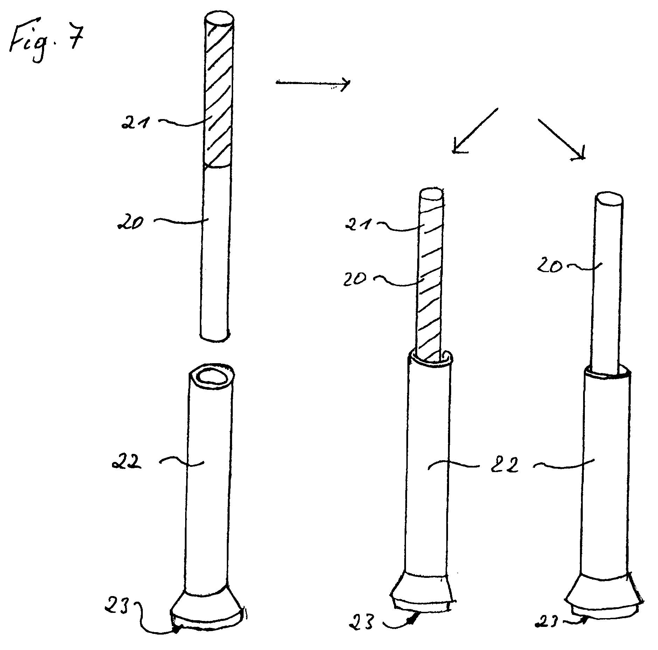

In der Figur 3 ist das Basismodul 3 in einer Ansicht von unten dargestellt, so dass der Haftmagnet 5 erkennbar ist.

Des weiteren kann das Basismodul 3 der erfindungsgemäßen Signalvorrichtung 1 einen oder mehrere Reflektorstreifen, -ringe oder -bänder (8, 8', 8'', ...) aufweisen - wie dies in der Figur 4 gezeigt ist -, wobei diese abziehbar ausgebildet sein können.

Wie in der Figur 5 dargestellt, wird bei der erfindungsgemäßen Signalvorrichtung 1 zum Zwecke des Anzeigens eines zweiten bzw. weiteren Zustandes das zweite Modul 4 über das Basismodul 3 geschoben.

Figur 6 zeigt die erfindungsgemäße Signalvorrichtung 1 in einem Zustand, bei dem das zweite Modul 4 über das Basismodul 3 geschoben ist.

Denkbar ist ferner, dass mehrere, unterschiedliche Farben und/oder Reflektorstreifen, -ringe oder -bänder aufweisende Hülsen 4 mitgeführt werden, so dass mittels dieser unterschiedlichen Hülsen 4 unterschiedliche Zustände angezeigt werden können.

Eine weitere, in den Figuren 1 bis 5 nicht dargestellte Ausführungsform der erfindungsgemäßen Signalvorrichtung lässt sich dadurch realisieren, dass das Basismodul einen oder mehrere Reflektorstreifen, -ringe oder -bänder aufweist; diese Reflektorstreifen, -ringe oder -bänder somit das zweite Modul darstellen.

Bei dieser Ausführungsform können ebenfalls zwei unterschiedliche Zustände dargestellt werden, indem beispielsweise das Basismodul mit den Reflektorstreifen, -ringen oder -bändern an dem Kraftfahrzeug angebracht wird, um zu signalisieren, dass keine Hilfe benötigt wird. Durch das Abnehmen des oder der Reflektorstreifen, -ringe oder -bänder wird dann angezeigt, dass das Kraftfahrzeug bereits kontrolliert wurde.

Fig. 7 zeigt eine weitere Ausführungsform vorliegender Erfindung. Bei dieser besteht die Signalvorrichtung aus einem Stab 20, der an einem Ende einen Reflektorstreifen 21 aufweist und von einer Haltehülse 22 gehalten werden kann, die mit einem Haltemagnet 23 versehen ist. Je nachdem, wie der Stab 20 in die Haltehülse 22 gesteckt ist, können durch die Anordnung zwei Zustände dargestellt werden.

## Patentansprüche

1. Signalvorrichtung, insbesondere zur Verwendung an einem Kraftfahrzeug, ***dadurch gekennzeichnet, dass*** ein Basismodul (3) sowie ein zweites Modul (4), wobei das zweite Modul (4) an dem Basismodul (3) derart anbringbar ist, dass dieses zumindest teilweise verdeckt ist.

2. Signalvorrichtung nach Anspruch 1, ***dadurch gekennzeichnet, dass*** das Basismodul (3) in Form eines Stabes und das zweite Modul (4) in Form einer Hülse ausgebildet sind.

3. Signalvorrichtung nach Anspruch 1 oder 2, ***dadurch gekennzeichnet, dass*** das Basismodul (3) Mittel zum Befestigen an unterschiedlichen Flächen, vorzugsweise an metallischen Flächen aufweist.

4. Signalvorrichtung nach Anspruch 3, ***dadurch gekennzeichnet, dass*** die Mittel zum Befestigen des Basismodules (3) an einer metallischen Fläche als wenigstens ein Haftmagnet (5) ausgebildet sind.

5. Signalvorrichtung nach einem der vorhergehenden Ansprüche, ***dadurch gekennzeichnet, dass*** das Basismodul (3) und/oder das zweite Modul (4) farbig, vorzugsweise farbig reflektierend ausgebildet sind und/oder Reflektorstreifen, -ringe oder -bänder (8, 8', 8'', ...) aufweisen.

6. Signalvorrichtung nach Anspruch 5, ***dadurch gekennzeichnet, dass*** die Reflektorstreifen, -ringe oder -bände (8, 8', 8'', ...) abziehbar ausgebildet sind.

7. Signalvorrichtung, insbesondere zur Verwendung an einem Kraftfahrzeug, ***gekennzeichnet durch*** eine Anzeige mit zwei Zuständen und Einstellmitteln, mit welchen wahlweise ein erster Zustand bzw. ein zweiter Zustand eingestellt werden kann.

8. Signalvorrichtung nach Anspruch 7, ***dadurch gekennzeichnet, dass*** die Signalvorrichtung einen Stab umfasst, welcher zwei unterschiedlich markierte Enden aufweist.

9. Signalvorrichtung nach Anspruch 7 oder 8, ***dadurch gekennzeichnet, dass*** die Einstellmittel Sicherungsmittel, wie ein Schloss oder ähnliches, aufweisen, welche einen unbefugten Wechsel zwischen den Zuständen verhindern.

10. Signalvorrichtung nach einem der vorhergehenden Ansprüche, ***dadurch gekennzeichnet, dass*** eine Baugruppe der Signalvorrichtung, insbesondere der Fuß des Basismoduls (3), eine Kante aufweist.

11. Signalvorrichtung nach einem der vorhergehenden Ansprüche, ***dadurch gekennzeichnet, dass*** die Signalvorrichtung ein Mittel zum Trennen von Rückhaltegurten aufweist.
